# DEMANDE DE BREVET EUROPEEN

(11) **EP 1 312 590 A1**
(43) Date de publication de la demande: **21.05.2003**
(21) Numéro de dépôt: 02370048.7
(22) Date de dépôt: 18.11.2002
(51) Int. Cl.: C04B 28/06

(54) **Composition cimentaire, procédé de fabrication de chapes à retrait et relèvement des bords réduits, et chapes obtenues**

(30) Priorité: 19.11.2001 FR 0114942
(71) Demandeur: Carrières du Boulonnais, 62250 Ferques (FR)
(72) Inventeur: Holard, Eric, 62100 Calais (FR); Ambroise, Jean, 69530 Brignais (FR)
(74) Mandataire: Hennion, Jean-Claude

(57) **Abrégé**

Composition cimentaire à base de ciment sulfoalumineux comprenant en outre au moins un agent fluidifiant et procédé de fabrication de chapes à retrait et tuilage réduits à partir de cette composition.

## Description

La présente invention concerne, de façon générale et selon un premier de ses aspects, l'industrie du ciment.

Plus précisément, l'invention concerne, selon son premier aspect, une composition cimentaire.

Des compositions cimentaires sont bien connues. Les applications des compositions cimentaires incluent la préparation de surfaces lisses telles que des dalles ou des chapes. A cette fin, le besoin en compositions cimentaires d'une fluidité suffisante pour permettre leur étalement rapide a été ressenti très tôt. Ces compositions cimentaires sont connues sous l'appellation de « compositions autonivelantes ». De nombreuses compositions autonivelantes à base de ciment Portland ont été proposées.

Cependant, ces compositions cimentaires présentent des inconvénients, en particulier lors de leur application à la fabrication de chapes. En effet, un retrait de dessiccation relativement important des chapes réalisées est toujours observé, ainsi qu'un relèvement des bords de chape ou « curling ». Par ailleurs, il est fréquent d'observer une fissuration des chapes fabriquées à partir de ces compositions cimentaires.

La présente invention permet de réduire de manière spectaculaire les inconvénients évoqués ci-dessus. Ainsi, la composition cimentaire selon l'invention est essentiellement caractérisée en ce qu'elle est à base de ciment sulfoalumineux, et en ce qu'elle comprend en outre au moins un agent fluidifiant.

Lors de leur mise en oeuvre, les compositions cimentaires selon l'invention permettent, de façon surprenante, de réduire considérablement et de rendre négligeables, comparativement aux compositions connues, (A) le retrait, (B) le relevé des bords, et (C) le risque de fissuration, qui se produisent lors de leur durcissement. De plus, les compositions cimentaires mises en oeuvre selon l'invention présentent simultanément les propriétés (D) d'être manipulables initialement pendant une période de temps suffisante pour pouvoir les utiliser dans des conditions satisfaisantes, et (E) d'acquérir une résistance mécanique suffisante à jeune âge.

Un des mérites de l'invention est d'avoir démontré que les ciments sulfo-alumineux se prêtent particulièrement bien à la réalisation de compositions autonivelantes, dans la mesure où ces ciments sont additionnés d'au moins un agent fluidifiant encore appelé superplastifiant.

Des agents fluidifiants acceptables incluent une mélamine formaldéhyde, un dérivé de la mélamine ou un naphtalène sulfoné, des compositions comprenant des monomères vinyliques carboxylés et/ou sulfonés, des acides aminosulfoniques, des solutions de polycarboxylate, et des polyoxyalkyl-aminoalkylène phosphonates, comme décrit dans le brevet FR-B-2763065.

Des clinkers et des ciments sulfoalumineux acceptables incluent ceux préparés par le procédé décrit dans la demande de brevet Français N° 01 06 830 non encore publiée.

Selon un de ses aspects, la composition cimentaire de l'invention comprend un clinker sulfoalumineux et un sulfate de calcium, et de façon préférée, de 70 à 85% en poids dudit clinker sulfoalumineux et de 15 à 30% en poids dudit sulfate de calcium. Un sulfate de calcium acceptable peut être choisi parmi les anhydrites naturelles et résiduaires et les gypses naturels et résiduaires.

La composition cimentaire selon l'invention peut également comprendre du sable. Le sable aura de préférence, une granulométrie de 0-5mm.

La composition cimentaire selon l'invention peut également comprendre un agent épaississant. Des agents épaississants acceptables incluent la sépiolite, ou des silices ultra-fines, des composés organiques tels que des dérivés de la cellulose ou des polysaccharides de poids moléculaire élevé comme les amidons, les gommes de xanthane, la gomme Welan ou les éthers cellulosiques.

La composition cimentaire selon l'invention peut également comprendre une charge de particules fines. Des charges de particules fines acceptables présentent une granulométrie ne dépassant pas 200 microns. Des charges de particules fines acceptables incluent les cendres volantes, les fillers calcaires, les fumées de silice, le métakaolin, et les laitiers moulus.

La composition cimentaire selon l'invention peut également comprendre un agent mouillant. Des exemples d'agents mouillants acceptables incluent les polyéthers polyols, les polyalkylènes, les polyéthylènes-glycols, les polypropylène glycols possédant des fonctions hydroxyles libres.

La composition cimentaire selon l'invention peut également comprendre un retardateur de prise. Des exemples de retardateurs de prise incluent des composés du bore, tels que le tétraborate de sodium et l'acide borique.

De manière plus préférée, la composition cimentaire selon l'invention comprend (i) une partie en poids d'un ciment sulfoalumineux comprenant de 70 à 85% en poids de clinker sulfoalumineux et de 15 à 30% en poids de sulfate de calcium, (ii) 0 à 0,17 partie en poids de ciment Portland artificiel pur ou composé, (iii) 0,44 à 1 partie en poids de particules fines, (iv) 0,007 à 0,013 partie en poids d'un agent fluidifiant, (v) 0,001 à 0,027 partie en poids d'un agent de viscosité, (vi) 0 à 0,04 partie en poids d'un agent mouillant, (vii) 0 à 0,004 partie en poids d'un retardateur de prise.

La composition cimentaire selon l'invention comprend, de préférence, 3,67 à 4,10 parties en poids de sable.

Préalablement, et aux fins de sa mise en oeuvre, la composition cimentaire selon l'invention sera mélangée avec de l'eau, et de préférence, 0,85 à 1,20 partie en poids d'eau.

Selon un autre de ses aspects, l'invention concerne un procédé de fabrication d'une chape, comprenant les étapes suivantes :
(i) transport d'une composition cimentaire de l'invention sur le chantier de la chape ;
(ii) ajout d'eau à la composition cimentaire, cette étape étant réalisée avant, pendant et/ou après transport de la composition cimentaire sur le chantier ;
(ii') malaxage de la composition cimentaire avec l'eau, cette étape étant réalisée concomitamment avec l'étape d'ajout d'eau, par exemple dans un camion malaxeur ou dans un appareil de projection de mortier ;
(iii) préparation d'un support de la chape conformément aux règles du métier en vigueur dans le pays considéré,
(iv) éventuellement, ajustement de la rhéologie du mélange au moyen d'une addition supplémentaire d'au moins un des composés choisis parmi un agent fluidifiant, un agent de viscosité, un agent mouillant, un retardateur de prise,
(v) pompage, coulée dudit mélange sur le support et lissage de la chape à l'aide d'une barre de finition.

De manière préférée, la fluidité du mélange avant l'opération de coulée est telle que, lorsqu'un échantillon de ce mélange est versé dans un cône tronqué de référence (petit diamètre 55 mm, grand diamètre orienté vers le bas 95 mm, hauteur 70 mm), lors du retrait du cône tronqué, le mélange s'étale d'au moins 200 mm en moins de 5 secondes.

Selon un autre de ses aspects, l'invention concerne une chape obtenue selon un procédé conforme à l'invention.

Aux fins d'illustration, trois exemples de préparation de compositions sont maintenant présentés avec leurs performances respectives.

| **Composition en litres/m**^{**3**} | | **1** | **2** | **3** |
|---|---|---|---|---|
| **CSA** | KSA | 220 | 213,6 | 221 |
| | Borogypse | 0 | 86,4 | 39 |
| | Phosphogypse | 50 | 0 | 0 |
| CPA 52,5 PM (CEM I) | | 35 | 0 | 0 |
| Filler calcaire | | 120 | 0 | 260 |
| Cendres volantes | | 0 | 300 | 0 |
| Superplastifiant à 20% d'E.S. | | 3,6 | 0 | 1,8 |
| Superplastifiant à 30% d'E.S. | | 0 | 4,0 | 0 |
| **Epaississant** | | | | |
| | Amidon modifié à 20% d'E.S. | 0 | 8 | 7 |
| | Gomme Welan | 0,31 | 0 | 0 |
| Retardateur de prise | | 0 | 0 | 1,05 |
| Agent mouillant | | 5 | 12 | 0 |
| Eau | | 260 | 260 | 310 |

| **Performances mesurées** | | **1** | **2** | **3** |
|---|---|---|---|---|
| **Etalement (mm)** | initial | 240 | 270 | 280 |
| | à 60 minutes | 210 | 240 | 250 |
| | à 90 minutes | 210 | 230 | 240 |
| Densité à la fin du malaxage | | 1,95 | 2,05 | 2,15 |
| **Résistance en** **Compression (MPa)** | à 24 heures | 8 | 14,7 | 8 |
| | à 28 jours | 16 | 32,5 | 22 |
| Résistance en traction-flexion (MPa) | à 28 jours | 3,9 | 5,4 | 3,5 |
| Retrait à 28 jours, 20°C, 50% d'H.R. (micromètres/mètre) | | 250 | 200 | 300 |
| Relevé des angles (« curling ») (mm) | | 0,09 | 0,04 | 0,10 |
| CSA : Ciment sulfoalumineux | | | | |
| KSA : Clinker sulfoalumineux | | | | |
| Filler calcaire et Cendres volantes sont des charges de particules fines | | | | |
| E.S. : Extrait Sec | | | | |
| H.R. : Humidité Relative | | | | |

Le complément de volume pour obtenir 1 m³ est apporté par une charge de sable de granulométrie 0-5 mm.

Le relevé des angles a été mesuré à l'aide d'un appareil spécifique : Le mortier est coulé dans un moule carré de 330 mm x 330 mm et de 30 mm d'épaisseur. Des inserts métalliques sont scellés verticalement dans le mortier à chaque angle du moule et la partie émergeante de chacun des inserts métalliques est maintenue par un gabarit pendant 24 heures à compter de la coulée du mortier. Ensuite, 4 capteurs de déplacement sont fixés sur ces inserts et permettent de suivre en continu le « curling » de la plaque lorsque celle-ci est placée dans les conditions suivantes (20°C, 50% d'humidité relative).

Avec les mortiers à base de ciment sulfo-alumineux selon l'invention, le relevé des angles est compris entre 0,04 et 0,10 mm alors qu'il atteint couramment 0,15 à 0,40 mm pour des chapes en ciment Portland artificiel. De même, le retrait au centre de la plaque est toujours inférieur à 300 micromètres par mètre alors qu'il dépasse 500 micromètres par mètre pour une chape en ciment Portland artificiel.

L'utilisation de compositions de l'invention pour la fabrication de chapes présente donc un avantage indéniable par rapport aux compositions pour chapes existantes, à base de ciment Portland artificiel, et ce avec un minimum d'additifs ajoutés. Elles permettent l'obtention de surfaces lisses prêtes à l'emploi pour l'application de revêtements de finition et de protection variés, comme des peintures, des revêtements plastiques ou minéraux, des moquettes, des céramiques, des parquets, des résines.

## Revendications

1. Composition cimentaire, **caractérisée en ce qu'**elle est à base de ciment sulfoalumineux, et **en ce qu'**elle comprend en outre au moins un agent fluidifiant.

2. Composition cimentaire selon la revendication 1, **caractérisée en ce que** le ciment sulfoalumineux comprend un clinker sulfoalumineux et un sulfate de calcium.

3. Composition cimentaire selon la revendication 2, **caractérisée en ce que** le ciment sulfoalumineux comprend de 70 à 85% en poids dudit clinker sulfoalumineux et de 15 à 30% en poids dudit sulfate de calcium.

4. Composition cimentaire selon l'une quelconque des revendications précédentes, **caractérisée en ce qu'**elle comprend en outre du sable.

5. Composition cimentaire selon l'une quelconque des revendications précédentes, **caractérisée en ce qu'**elle comprend en outre un agent épaississant.

6. Composition cimentaire selon l'une quelconque des revendications précédentes, **caractérisée en ce qu'**elle comprend en outre une charge de particules fines.

7. Composition cimentaire selon l'une quelconque des revendications précédentes, **caractérisée en ce qu'**elle comprend en outre un agent mouillant.

8. Composition cimentaire selon l'une quelconque des revendications précédentes, **caractérisée en ce qu'**elle comprend en outre un retardateur de prise.

9. Composition cimentaire, **caractérisée en ce qu'**elle comprend (i) une partie en poids d'un ciment sulfoalumineux comprenant de 70 à 85% en poids de clinker sulfoalumineux et de 15 à 30% en poids de sulfate de calcium, (ii) 0 à 0,17 partie en poids de ciment Portland artificiel, (iii) 0,44 à 1 partie en poids de particules fines, (iv) 0,007 à 0,013 partie en poids d'un agent fluidifiant, (v) 0,001 à 0,027 partie en poids d'un agent de viscosité, (vi) 0 à 0,04 partie en poids d'un agent mouillant, (vii) 0 à 0,004 partie en poids d'un retardateur de prise.

10. Composition cimentaire selon la revendication 9, **caractérisée en ce qu'**elle comprend 3,67 à 4,10 parties en poids de sable.

11. Composition cimentaire selon l'une quelconque des revendications précédentes, **caractérisée en ce qu'**elle comprend en outre de l'eau.

12. Composition cimentaire selon la revendication 11, **caractérisée en ce qu'**elle comprend 0,85 à 1,20 partie en poids d'eau.

13. Procédé de fabrication d'une chape, **caractérisé en ce qu'**il comprend les étapes suivantes :
(i) transport d'une composition cimentaire de l'invention sur le chantier de la chape ;
(ii) ajout d'eau à la composition cimentaire, cette étape étant réalisée avant, pendant et/ou après transport de la composition cimentaire sur le chantier ;
(ii') malaxage de la composition cimentaire avec l'eau, cette étape étant réalisée concomitamment avec l'étape d'ajout d'eau, par exemple dans un camion malaxeur ou dans un appareil de projection de mortier ;
(iii) préparation d'un support de la chape conformément aux règles du métier en vigueur dans le pays considéré,
(iv) éventuellement, ajustement de la rhéologie du mélange au moyen d'une addition supplémentaire d'un des composés décrits aux points (iv) à (vii) de la revendication 9,
(v) pompage, coulée dudit mélange sur le support et lissage de la chape à l'aide d'une barre de finition.

14. Procédé selon la revendication 13, **caractérisé en ce que** la fluidité du mélange avant l'opération de coulée est telle que, lorsqu'un échantillon de ce mélange est versé dans un cône tronqué de référence (petit diamètre 55 mm, grand diamètre orienté vers le bas 95 mm, hauteur 70 mm), lors du retrait du cône tronqué, le mélange s'étale d'au moins 200 mm en moins de 5 secondes.

15. Chape obtenue par un procédé selon la revendication 13 ou la revendication 14.
